# EUROPÄISCHE PATENTSCHRIFT

(11) **EP 0 673 967 B1**
(45) Veröffentlichungstag und Bekanntmachung des Hinweises auf die Patenterteilung: **06.08.1997**
(21) Anmeldenummer: 94120844.9
(22) Anmeldetag: 28.12.1994
(51) Int. Cl.: C08L 9/00, B60C 1/00

(54) **Kautschukmischung, daraus hergestellte Reifenlauffläche und Reifen mit dieser Reifenlauffläche**
Rubber composition, tread made therefrom and tyres containing these treads
Composition de caoutchouc, bande de roulement fabriquée à partir de celle-ci et pneumatiques avec ces bandes de roulement

(30) Priorität: 22.03.1994 DE 4409861
(43) Veröffentlichungstag der Anmeldung: 27.09.1995
(73) Patentinhaber: SP REIFENWERKE GMBH, 63450 Hanau (DE)
(72) Erfinder: Fuchs, Hans-Bernd, Dr., D-63755 Alzenau-Hörstein (DE); Dietrich, Günter, D-60431 Frankfurt am Main (DE); Steinbrecht, Ulrich, Dr., D-64372 Ober-Ramstadt (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 456 902
- EP-A- 0 501 227
- Hans-Georg Elias, Makromolekule, Band 1, 5. Auflage, Hüthig & Wemp Verlag, Basel.Heidelberg.New York., 1990, Seiten 40-43
- Rubber Age, Volume 96, Okt. 1964- März 1965, Seiten 193 und 410-415

## Beschreibung

Die vorliegende Erfindung betrifft eine mit Schwefel vulkanisierbare Kautschukmischung, die ein durch Lösungspolymerisation in einem Kohlenwasserstofflösemittel hergestelltes Copolymer aus konjugiertem Dien und vinylaromatischer Verbindung, weitere Elastomere, Kieselsäure als Füllstoff, übliche Zusätze sowie ein Vulkanisationssystem enthält. Ferner betrifft die Erfindung Reifenlaufflächen, die diese Kautschukmischung enthalten sowie Reifen mit einer Reifenlauffläche, die die vulkanisierte Kautschukmischung enthält.

Die bei Reifen gewünschten Eigenschaften sind nur schwer gleichzeitig zu erreichen, da sie teilweise einander widersprechen. So bewirken Maßnahmen, die zu einer Verringerung des Rollwiderstands führen, eine Abnahme der Abriebfestigkeit. Der teilweise oder völlige Ersatz von Ruß durch den Füllstoff Kieselsäure z.B. verringert zwar den Rollwiderstand des Reifens, verschlechtert aber dessen Abriebfestigkeit. In der EP 0 299 074 B1 wird zur Vermeidung dieser Verschlechterung vorgeschlagen, für Kautschukmischungen, die Kieselsäure als Füllstoff in großen Anteilen enthalten, Polymere zu verwenden, die mit einer speziellen Silanverbindung modifiziert sind. Diese Maßnahme ist wegen der Verwendung spezieller Silanverbindungen für eine industrielle Anwendung ungünstig.

Um diesen Nachteil zu vermeiden, wird in der EP 0 501 227 A1 eine Kautschukmischung vorgeschlagen, die ein durch Lösungspolymerisation in einem Kohlenwasserstofflösemittel hergestelltes Copolymer aus konjugiertem Dien und vinylaromatischer Verbindung, eine ganz spezielle Kieselsäure, die z.B. nach dem in der EP 0 157 703 B1 beschriebenen Verfahren hergestellt ist, üblicherweise verwendete Zusätze sowie ein Vulkanisationssystem enthält. Diese Kautschukmischung wird in bekannter Weise durch stufenweises Vermischen der Bestandteile hergestellt, wobei Temperaturen eingehalten werden, bei denen noch keine Vernetzung eintritt. Der Kautschukmischung kann als Verschnitt mindestens ein weiteres Dienelastomer zugesetzt werden, wie z.B. Polyisopren, Naturkautschuk oder Polybutadien. Als Copolymer aus konjugiertem Dien und vinylaromatischer Verbindung kann ein Copolymer verwendet werden, das in Lösung in einem Kohlenwasserstofflösemittel in Gegenwart eines Initiators aus einer Alkalimetall- oder Erdalkalimetallverbindung hergestellt ist, wie es beispielsweise in der FR-PS 2 295 972 beschrieben wird.

Aufgabe der Erfindung ist die Bereitstellung von Kautschukmischungen, die nicht nur Reifenlaufflächen mit einer guten Kombination von Abriebfestigkeit und Rollwiderstand, sondern auch mit verbesserten Fahreigenschaften auf trockener und nasser Fahrbahn ergeben und die sich besser und einfacher verarbeiten lassen.

Ausgehend von der eingangs genannten mit Schwefel vulkanisierbaren Kautschukmischung wird diese Aufgabe dadurch gelöst, daß die Kautschukmischung 20 bis 80 Gewichtsteile Copolymer aus konjugiertem Dien und vinylaromatischer Verbindung mit sehr geringer Langkettenverzweigung, einer Defoelastizität im Bereich von 15 bis 25 mm, bestimmt nach DIN 53514 und einer Mooney-Viskosität im Bereich von 30 bis 80 Mooney-Einheiten, bestimmt mit einem Mooney-Gerät gemäß DIN 53523 bei einer Temperatur von 100°C, 10 bis 50 Gewichtsteile Polybutadien mit sehr geringer Langkettenverzweigung und ohne Mooney-Sprung, 10 bis 30 Gewichtsteile Polyisopren mit einem 3,4-Bindungsgehalt von 50 bis 70 Gew.-%, bestimmt nach der NMR-Methode, und 30 bis 100 Gewichtsteile Kieselsäure enthält, wobei alle Gewichtsteile auf 100 Gewichtsteile Gesamtelastomere bezogen sind. Gegenstand der Erfindung sind ferner Reifenlaufflächen, die diese Kautschukmischung enthalten, sowie Reifen, die die mit Schwefel vulkanisierten Laufflächen aufweisen. Die erfindungsgemäße Kautschukmischung kann zur Herstellung von Reifenlaufflächen verwendet werden, die für Reifen von Personenkraftwagen, Motorrädern, 4 x 4 Geländefahrzeugen, Transportern und Leicht-Lastkraftwagen geeignet sind.

Die vereinfachte und verbesserte Verarbeitbarkeit der erfindungsgemäßen Kautschukmischung macht sich sowohl beim Mischschritt als auch beim Extrusionsschritt bemerkbar. Man hat weniger Schrumpf, das heißt das extrudierte Produkt aus der erfindungsgemäßen Mischung behält besser seine Form. Ferner haben die aus der erfindungsgemäßen Mischung hergestellten Reifen eine bessere Naß- und Trockenhaftung als Reifen aus Kautschukmischungen, die nicht die erfindungsgemäß eingesetzten Elastomere sowie nur Ruß als Füllstoff enthalten. Diese Eigenschaften werden durch eine spezielle Kombination aus drei Elastomeren mit besonderen Eigenschaften sowie den Einsatz von Kieselsäure als Füllstoff erreicht.

Als erstes Elastomer enthält die erfindungsgemäße Kautschukmischung ein durch Lösungspolymerisation in einem Kohlenwasserstofflösemittel hergestelltes Copolymer aus konjugiertem Dien und vinylaromatischer Verbindung. Das Copolymer weist eine sehr geringe Langkettenverzweigung auf. Die Defoelastizität soll im Bereich von 15 bis 25 mm, bestimmt nach DIN 53514, liegen, bevorzugt im Bereich von 15 bis 20 mm. Die Mooney-Viskosität liegt im Bereich von 30 bis 80 Mooney-Einheiten, gemessen mit einem Mooney-Gerät gemäß D 53523. Die Copolymerisation wird in einem Kohlenwasserstofflösemittel in Gegenwart zum Beispiel eines Organolithiuminitiators so durchgeführt, daß keine Kopplungsreaktionen auftreten und ein Mooney-Sprung (Molmassensprung) nicht erfolgt. Es wird die geringste mögliche Menge an Divinylbenzol für die Copolymerisation eingesetzt. Durch Lösungspolymerisation hergestellte Copolymere aus Styrol und Butadien mit sehr geringer Langkettenverzweigung und mit einer Defoelastizität sowie Mooney-Viskosität innerhalb der beanspruchten Bereiche sind im Handel erhältlich, zum Beispiel Calprene^{R} 377 der Firma Repsol.

Das Copolymer weist vorzugsweise einen Gehalt von 15 bis 35 Gew.-% vinylaromatischer Verbindung, einen 1,2-Bindungsgehalt im Dienanteil von 25 bis 70 Gew.-% sowie eine Glasübergangstemperatur (Tg) von -60°C bis -10°C auf, bestimmt nach der Torsionspendel-Methode.

Vorzugsweise beträgt der Gehalt des Copolymers 40 bis 60 Gewichtsteile je 100 Gewichtsteile Gesamtelastomer in der erfindungsgemäßen Kautschukmischung.

Als konjugiertes Dien des Copolymers sind 1,3 Butadien, Isopren und 2,3-Dimethyl-1,3-butadien geeignet. Als vinylaromatische Verbindung des Copolymers sind Styrol und o-, m-, und p-Methylstyrol geeignet. Bevorzugt wird Styrol-Butadien-Copolymer verwendet.

Das Copolymer kann in Form von ölverstrecktem Copolymer eingesetzt werden. In der Regel kann der Gesamtölgehalt der Kautschukmischung im Bereich von 30 bis 45 Gewichtsteilen je 100 Gewichtsteile Gesamtelastomere liegen.

Als zweites Elastomer enthält die erfindungsgemäße Kautschukmischung Polybutadien mit sehr geringer Langkettenverzweigung und ohne Mooney-Sprung in einer Menge von 10 bis 50 Gewichtsteilen je 100 Gewichtsteile Gesamtelastomere. Vorzugsweise hat das Polybutadien eine Glasübergangstemperatur von -107°C bis -95°C, bestimmt nach der Torsionspendel-Methode. Ein geeignetes Polybutadien ist zum Beispiel ein Titan-Polybutadien Typ der Bayer AG.

Als drittes Elastomer enthält die erfindungsgemäße Kautschukmischung 10 bis 30 Gewichtsteile Polyisopren je 100 Gewichtsteile Gesamtelastomere. Der 3,4-Bindungsgehalt beträgt 50 bis 70 Gew.-%, bestimmt nach der NMR-Methode, bevorzugt 60 Gew.-%. Die Glasübergangstemperatur (Tg), bestimmt nach der Torsionspendel-Methode, beträgt vorzugsweise -15°C bis +5°C.

Die erfindungsgemäße Kautschukmischung kann zusätzlich zu den drei Elastomeren noch Naturkautschuk enthalten in einer Menge von 0 bis 40 Gewichtsteilen je 100 Gewichtsteile Gesamtelastomere.

Als Füllstoff enthält die erfindungsgemäße Kautschukmischung Kieselsäure in einer Menge von 30 bis 100 Gewichtsteilen je 100 Gewichtsteile Gesamtelastomergehalt. Als Kieselsäure kann sowohl "klassische" Kieselsäure als auch Kieselsäure mit einer optimierten Dispergierbarkeit in der Kautschukmischung verwendet werden. Unter "klassischer" Kieselsäure ist Kieselsäure zu verstehen, wie sie üblicherweise zur Reifenherstellung verwendet wird und als Handelsprodukte von verschiedenen Herstellern angeboten wird. Üblicherweise haben diese Kieselsäuren eine BET-Oberfläche zwischen 100 und 250 m²/g nach DIN 66 131, ISO 5794/1 Annex D, eine CTAB-Oberfläche zwischen 100 und 250 m²/g nach ISO 6810, ASTM D-3765 und eine mit DBP gemessene Ölaufnahme zwischen 150 und 250 ml/100g nach ISO S-4656, ASTM D-2414, DIN 53601. Als Kieselsäure mit einer optimierten Dispergierbarkeit kann zum Beispiel Kieselsäure verwendet werden, wie sie in der EP-0 157 703 B1 beschrieben ist. Erfindungsgemäß wird vorzugsweise eine Kieselsäure mit einer BET-Oberfläche zwischen 150 und 250 m²/g verwendet. Vorzugsweise enthält die Kautschukmischung 40 bis 80 Gewichtsteile Kieselsäure je 100 Gewichtsteile Gesamtelastomere.

Als weiteren Füllstoff kann die erfindungsgemäße Kautschukmischung Ruß enthalten. Der Rußgehalt sollte nicht höher als der Kieselsäuregehalt sein, und der Gesamtgehalt an Füllstoffen sollte nicht höher als 100 Gewichtsteile, bezogen auf 100 Gewichtsteile Gesamtelastomere, liegen. Wenn Ruß der Mischung zugesetzt wird, liegt der Gehalt vorzugsweise im Bereich von 20 bis 40 Gewichtsteilen, bezogen auf 100 Gewichtsteile Gesamtelastomer. Zusätzlich kann noch Ruß im Verstärkungsmittel enthalten sein.

Als übliche Zusätze kann die erfindungsgemäße Kautschukmischung aromatische und/oder naphthenische Öle, Verstärkungsmittel, Alterungsschutzmittel, Tackifier, Aktivatoren und Verarbeitungshilfsmittel enthalten. Alle diese Zusätze werden in den üblichen Mengenbereichen eingesetzt. Wenn ein Teil der Kieselsäure durch Ruß ersetzt ist, wird das Verstärkungsmittel in geringerer Menge zugesetzt. Ferner enthält die erfindungsgemäße Kautschukmischung ein Vulkanisationssystem mit Schwefel und Vulkanisationsbeschleunigern.

Die Kautschukmischung kann nach folgendem mehrstufigem Verfahren hergestellt werden. In einer ersten Stufe werden die Elastomere mit den üblichen Zusätzen und der Kieselsäure in einem Kneter gemischt. Die Temperatur soll dabei nicht auf Werte steigen, bei denen bereits eine Vernetzung einsetzt. Üblicherweise sollen Temperaturen von 160 bis 170°C nicht überschritten werden. Nach der Abkühlung der Mischung wird sie nochmals in einer zweiten Stufe geknetet, wobei wiederum die Temperatur nicht auf Werte steigen soll, bei denen eine Vernetzung stattfindet. In einer anschießenden dritten Stufe wird das Vulkanisationssystem auf einer Walze eingearbeitet, wobei auch hierbei Temperaturen unterhalb der Vernetzungstemperatur eingehalten werden. Die Zeiten für die Mischprozesse in den einzelnen Stufen sind jeweils so bemessen, daß eine gute Durchmischung der Bestandteile erreicht wird.

Die Erfindung wird an Hand der folgenden Beispiele näher erläutert.

Es wurden drei Kautschukmischungen mit den in der folgenden Tabelle angegebenen Zusammensetzungen hergestellt, wobei jeweils die Gewichtsteile der Komponenten in den Mischungen angegeben sind. Die Mischung 1 ist eine Vergleichsrezeptur, die Mischungen 2 und 3 sind erfindungsgemäße Rezepturen.

**Tabelle**

| Kautschukmischung | 1 | 2 | 3 |
|---|---|---|---|
| E-SBR | 125,6 | | |
| S-SBR | | 89,38 | 89,38 |
| Polybutadien | | 20 | 20 |
| Polyisopren | | 15 | 15 |
| Ruß N 234 | 79 | | |
| Ruß N 335 | | | 40 |
| Kieselsäure VN3 | | 80 | 40 |
| Verstärkungsmittel | | 12,8 | 6,4 |
| Zinkoxid | 3,0 | 3,0 | 3,0 |
| Stearinsäure | 1,5 | 2,0 | 2,0 |
| Aromatisches Öl (Gesamt) | 38,3 | 38,6 | 38,6 |
| Alterungsschutzmittel | 2,9 | 3,5 | 3,5 |
| Vulkanisationsbeschleuniger A | 1,4 | 1,7 | 1,7 |
| Vulkanisationsbeschleiniger B | | 1,5 | 0,8 |
| Schwefel | 1,9 | 1,4 | 1,4 |
| Naßhaftung/Trockenhaftung | 100 | 110 | 104 |
| Verarbeitbarkeit | gut | sehr gut | sehr gut |

Die in der obigen Tabelle angegebenen Bestandteile werden im folgenden erläutert:

E-SBR: Durch Emulsionspolymerisation herstelltes Styrol-Butadien-Copolymer mit einem Styrolgehalt von 23,5 Gew.-%. Es ist eine Mischung von ölverstrecktem und unverstrecktem Styrol-Butadien-Copolymer. Der Ölgehalt des ölverstreckten Copolymers beträgt 37,5 Gewichtsteile je 100 Gewichtsteile Copolymer. Das Verhältnis von ölverstrecktem zu unverstrecktem Copolymer in der Mischung ist ungefähr 68:32, so daß 125,6 Gewichtsteile der Mischung 100 Gewichtsteile Elastomer enthalten.

S-SBR: Durch Lösungspolymerisation in einem Kohlenwasserstofflösemittel hergestelltes Styrol-Butadien-Copolymer mit einem Styrolgehalt von 25 Gew.-% und einem 1,2-Bindungsgehalt im Butadienanteil von 30 Gew.-%. Das Copolymer ist ölverstreckt mit einem Gehalt von 37,5 Gewichtsteilen hocharomatischem Öl je 100 Gewichtsteile Copolymer. Das Copolymer hat eine sehr geringe Langkettenverzweigung und eine Mooney-Viskosität ML (1+4) 100°C von 50 ± 4, bestimmt nach ASTM D 1646. Ein solches Copolymer ist zum Beispiel unter der Bezeichnung Calprene^{R} 377 von Repsol im Handel erhältlich.

Polybutadien: Das Polybutadien hat eine sehr geringe Langkettenverzweigung. Es handelt sich um einen speziellen Titan-Polybutadien-Typ der Bayer AG.

Polyisopren: Es handelt sich um ein Polyisopren mit einem 3,4-Bindungsgehalt von 60 Gew.-%.

Ruß N 234: BET-Oberfläche 125 m²/g, bestimmt nach ISO S-4652, ASTM D-3037,DIN 66132; CTAB-Oberfläche 120 m²/g, bestimmt nach ISO 6810, ASTM D-3765; DBP-Absorption 125 ml/100 g, bestimmt nach ISO S-4656, ASTM D-2414; DIN 53601, Handelsprodukt der Degussa Corax^{R} N 234.

Ruß N 335: BET-Oberfläche 87 m²/g; CTAB-Oberfläche 87 m²/g; DBP-Absorption 110 ml/100g. Handelsprodukt der Degussa Corax^{R} N 335.

Kieselsäure VN3: BET-Oberfläche 170 m²/g, Handelsprodukt der Degussa Ultrasil^{R} VN3 Granulat.

Verstärkungsmittel: Mischung im Verhältnis 1:1 von Ruß N 330 und polysulfidischem Organosilan, Handelsprodukt der Degussa X 50-S.

Aromatisches Öl: Bei dem in der Tabelle angegebenen Gewichtsteilen handelt es sich um den Gesamtgehalt an aromatischem Öl in der Kautschukmischung, der sich aus dem in den ölverstreckten Copolymeren enthaltenen Öl und dem zugesetzten Öl zusammensetzt.

Alterungsschutzmittel: Gemischte Di-aryl-p-phenylendiamine.

Vulkanigationsbeschleuniger A: CBS (N-Cyclohexyl-2-benzothiazolsulfonamid).

Vulkanisationsbeschleuniger B: DPG (N,N'-Diphenylguanidin).

Die Kautschukmischungen wurden jeweils folgendermaßen hergestellt. In einen Kneter mit einer Knetertemperierung von 50°C und einer Kneterdrehzahl von 50 pro min wurden in einer ersten Stufe die Elastomere gegeben und geknetet. Dann wurden Zinkoxid, Stearinsäure und Alterungsschutzmittel zugegeben und eingeknetet. Anschließend wurden jeweils die Hälfte der Kieselsäure, des Verstärkungsmittel und des aromatischen Öls im Fall der Mischung 2, jeweils die Hälfte des Rußes und des aromatischen Öls im Fall der Mischung 1 und jeweils die Hälfte der Kieselsäure, des Rußes, des Verstärkungsmittel und des aromatischen Öls im Fall der Mischung 3 zugegeben und eingeknetet. Schließlich wurde jeweils die zweite Hälfte der eben genannten Bestandteile zugegeben und eingeknetet. Bei dem gesamten Mischprozeß wurde eine maximale Temperatur von 160°C eingehalten.

Nach Abkühlung der Mischungen wurde in einer zweiten Stufe nochmals geknetet, wobei wiederum eine Temperatur von 160°C nicht überschritten wurde. Diese zweite Stufe wurde nur bei den Mischungen 2 und 3 durchgeführt, dagegen nicht bei der Mischung 1. Schließlich wurde in einer weiteren Stufe das Vulkanisationssystem aus Schwefel und Vulkanisationsbeschleunigern auf einer Walze eingemischt. Auch hierbei wurde eine Temperatur unterhalb der Vernetzungstemperatur eingehalten.

Die Mischungen wurden dann durch Formung und Vulkanisation unter üblichen Bedingungen zu Reifenlaufflächen verarbeitet.

Sowohl bei der Herstellung der Mischungen und der Formgebung wurde ihre Verarbeitbarkeit miteinander verglichen. Die Verarbeitbarkeit der Vergleichsrezeptur 1 wurde mit gut beurteilt, die erfindungsgemäßen Rezepturen 2 und 3 zeigen beim Mischprozeß und bei der Formgebung eine gegenüber der Vergleichsrezeptur 1 bessere Verarbeitbarkeit und wurden daher mit sehr gut beurteilt.

Reifen mit aus den Mischungen hergestellten vulkanisierten Reifenlaufflächen wurden unter identischen Bedingungen auf trockener und nasser Oberfläche der Teststrecke geprüft. Naß- und Trockenhaftung des Reifens mit aus der Vergleichsrezeptur 1 hergestellten Reifenlauffläche wurde jeweils der Wert 100 zugeordnet. Die für die Reifen mit aus den erfindungsgemäßen Mischungen hergestellten Reifenlaufflächen erhaltenen Naß- und Trockenhaftungen wurden jeweils als Relativwerte gegenüber dem Bezugswert 100 in der Tabelle angegeben. Werte über 100 bedeuten eine Verbesserung dieser Eigenschaften.

Wie den in der Tabelle angegebenen Werten zu entnehmen ist, sind sowohl die Verarbeitbarkeit der erfindungsgemäßen Mischungen als auch die Haftung auf trockener und nasser Oberfläche der aus diesen Mischungen hergestellten vulkanisierten Reifenlaufflächen besser als bei der Vergleichsmischung.

## Patentansprüche

1. Mit Schwefel vulkanisierbare Kautschukmischung, die ein durch Lösungspolymerisation in einem Kohlenwasserstofflösemittel hergestelltes Copolymer aus konjugiertem Dien und vinylaromatsicher Verbindung, weitere Elastomere, Kieselsäure als Füllstoff, übliche Zusätze sowie ein Vulkanisationssystem enthält, dadurch gekennzeichnet, daß die Kautschukmischung 20 bis 80 Gewichtsteile Copolymer aus konjugiertem Dien und vinylaromatischer Verbindung mit sehr geringer Langkettenverzweigung, einer Defoelastizität im Bereich von 15 bis 25 mm, bestimmt nach DIN 53514 und einer Mooney-Viskosität im Bereich von 30 bis 80 Mooney-Einheiten, bestimmt mit einem Mooney-Gerät gemäß DIN 53523 bei einer Temperatur von 100°C, 10 bis 50 Gewichtsteile Polybutadien mit sehr geringer Langkettenverzweigung und ohne Mooney-Sprung, 10 bis 30 Gewichtsteile Polyisopren mit einem 3,4-Bindungsgehalt von 50 bis 70 Gew.-%, bestimmt nach der NMR-Methode, und 30 bis 100 Gewichtsteile Kieselsäure enthält, wobei alle Gewichtsteile auf 100 Gewichtsteile Gesamtelastomere bezogen sind.

2. Kautschukmischung nach Anspruch 1, dadurch gekennzeichnet, daß das Copolymer eine Defoelastizität im Bereich von 15 bis 20 mm aufweist.

3. Kautschukmischung nach Anspruch 1 oder 2, dadurch gekennzeichnet, daß das Copolymer 15 bis 35 Gew.-% vinylaromatische Verbindung enthält, und der 1,2-Bindungsgehalt im Dienanteil 25 bis 70 Gew.-% beträgt.

4. Kautschukmischung nach einem der Ansprüche 1 bis 3, dadurch gekennzeichnet, daß sie 40 bis 60 Gewichtsteile Copolymer je 100 Gewichtsteile Gesamtelastomer enthält.

5. Kautschukmischung nach einem der Ansprüche 1 bis 4, dadurch gekennzeichnet, daß das Polyisopren einen 3,4-Bindungsgehalt von 60 Gew.-% aufweist.

6. Kautschukmischung nach einem der Ansprüche 1 bis 5, dadurch gekennzeichnet, daß das Copolymer Styrol-Butadien-Copolymer ist.

7. Kautschukmischung nach einem der Ansprüche 1 bis 6, dadurch gekennzeichnet, daß sie 40 bis 80 Gewichtsteile Kieselsäure enthält.

8. Kautschukmischung nach einem der Ansprüch 1 bis 7, dadurch gekennzeichnet, daß die Kieselsäure eine BET-Oberfläche zwischen 150 und 250 m²/g aufweist.

9. Kautschukmischung nach einem der Ansprüche 1 bis 8, dadurch gekennzeichnet, daß sie als weiteren Füllstoff Ruß enthält, wobei der Rußgehalt höchstens gleich groß ist wie der Kieselsäuregehalt, und der Gesamtgehalt an Füllstoffen auf 100 Gewichtsteile je 100 Gewichtsteile Gesamtelastomere begrenzt ist.

10. Kautschukmischung nach Anspruch 9, dadurch gekennzeichnet, daß sie 20 bis 40 Gewichtsteile Ruß je 100 Gewichtsteile Gesamtelastomere enthält.

11. Kautschukmischung nach einem der Ansprüche 1 bis 10, dadurch gekennzeichnet, daß das Copolymer eine Glasübergangstemperatur (Tg) von -60°C bis -10°C, das Polybutadien eine Glasübergangstemperatur (Tg) von -107°C bis -95°C und das Polyisopren eine Glasübergangstemperatur (Tg) von -15°C bis +5°C hat.

12. Reifenlauffläche, dadurch gekennzeichnet, daß sie eine mit Schwefel vulkanisierbare Kautschukmischung nach einem der Ansprüche 1 bis 11 enthält.

13. Reifen, dadurch gekennzeichnet, daß er eine mit Schwefel vulkanisierte Lauffläche nach Anspruch 12 enthält.

## Claims

1. Rubber mixture vulcanisable with sulphur and containing a copolymer of conjugated diene and vinyl aromatic compound manufactured by solution polymerisation in a hydrocarbon solvent, further elastomers, silica as a filler, customary additives and also a vulcanisation system, characterised in that the rubber mixture contains 20 to 80 parts by weight of copolymer of conjugated diene and vinyl aromatic compound with very little long chain branching, a defo-elasticity in the range from 15 to 25 mm determined in accordance with DIN 53514 and a Mooney viscosity in the range of 30 to 80 Mooney units determined with a Mooney apparatus in accordance with DIN 53523, at a temperature of 100°C, 10 to 50 parts by weight of polybutadiene with very little long chain branching and without Mooney step, 10 to 30 parts by weight of polyisoprene with a 3,4-bond content of 50 to 70 percent by weight determined in accordance with the NMR method, and 30 to 100 parts by weight of silica, with all parts by weight being related to 100 parts by weight of total elastomers.

2. Rubber mixture in accordance with claim 1, characterised in that the copolymer has a defo-elasticity in the range of 15 to 20 mm.

3. Rubber mixture in accordance with claim 1 or claim 2, characterised in that the copolymer contains 15 to 35% by weight of vinyl aromatic compound and in that the 1,2-bond content in the diene component amounts to 25 to 70% by weight.

4. Rubber mixture in accordance with one of the claims 1 to 3, characterised in that it contains 40 to 60 parts by weight of copolymer per 100 parts by weight of total elastomer.

5. Rubber mixture in accordance with one of the claims 1 to 4, characterised in that the polyisoprene has a 3,4-bond content of 60% by weight.

6. Rubber mixture in accordance with one of the claims 1 to 5, characterised in that the copolymer is styrene-butadiene copolymer.

7. Rubber mixture in accordance with one of the claims 1 to 6, characterised in that it contains 40 to 80 parts by weight of silica.

8. Rubber mixture in accordance with one of the claims 1 to 7, characterised in that the silica has a BET surface between 150 and 250 m²/g.

9. Rubber mixture in accordance with one of the claims 1 to 8, characterised in that it contains carbon black as a further filler, with the carbon black content being at least as large as the silica content, and the total content of fillers being restricted to 100 parts by weight per 100 parts by weight of total elastomers.

10. Rubber mixture in accordance with claim 9, characterised in that it contains 20 to 40 parts by weight of carbon black per 100 parts by weight of total elastomers.

11. Rubber mixture in accordance with one of the claims 1 to 10, characterised in that the copolymer has a glass transition temperature (Tg) of -60°C to -10°C, the polybutadiene has a glass transition temperature (Tg) of -107°C to -95°C and the polyisoprene has a glass transition temperature (Tg) of -15°C to +5°C.

12. Tyre tread, characterised in that it contains a rubber mixture in accordance with one of the claims 1 to 11 and vulcanisable with sulphur.

13. Tyre, characterised in that it contains a tread in accordance with claim 12 and vulcanised with sulphur.

## Revendications

1. Mélange de caoutchoucs vulcanisable avec du soufre, qui contient un copolymère d'un diène conjugué et d'un composé vinylaromatique préparé par polymérisation en solution dans un solvant hydrocarboné, d'autres élastomères, de l'acide silicique comme charge, des additifs courants et un système de vulcanisation, caractérisé en ce que le mélange de caoutchoucs contient 20 à 80 parties en masse de copolymère de diène conjugué et de composé vinylaromatique ayant une très faible ramification à longues chaînes, une élasticité défo, déterminée selon DIN 53514, dans le domaine de 15 à 25 mm, et une viscosité Mooney, déterminée avec un appareil Mooney selon DIN 53523 à une température de 100°C, dans le domaine de 30 à 80 unités Mooney, 10 à 50 parties en masse de polybutadiène à très faible ramification à longues chaînes et sans discontinuité Mooney, 10 à 30 parties en masse de polyisoprène ayant une teneur en liaison 3,4, déterminée selon la méthode RMN, de 50 à 70 % en masse, et 30 à 100 parties en masse d'acide silicique, toutes les parties en masse étant rapportées à 100 parties en masse d'élastomères totaux.

2. Mélange de caoutchoucs selon la revendication 1, caractérisé en ce que le copolymère présente une élasticité défo dans le domaine de 15 à 20 mm.

3. Mélange de caoutchoucs selon la revendication 1 ou 2, caractérisé en ce que le copolymère contient 15 à 35 % en masse de composé vinylaromatique et la teneur en liaison 1,2 dans la partie diène est de 25 à 70 % en masse.

4. Mélange de caoutchoucs selon l'une des revendications 1 à 3, caractérisé en ce qu'il contient 40 à 60 parties en masse de copolymère pour 100 parties en masse d'élastomère total.

5. Mélange de caoutchoucs selon l'une des revendications 1 à 4, caractérisé en ce que le polyisoprène présente une teneur en liaison 3,4 de 60 % en masse.

6. Mélange de caoutchoucs selon l'une des revendications 1 à 5, caractérisé en ce que le copolymère est un copolymère styrène-butadiène.

7. Mélange de caoutchoucs selon l'une des revendications 1 à 6, caractérisé en ce qu'il contient 40 à 80 % parties en masse d'acide silicique.

8. Mélange de caoutchoucs selon l'une des revendications 1 à 7, caractérisé en ce que l'acide silicique présente une surface BET comprise entre 150 et 250 m²/g.

9. Mélange de caoutchoucs selon l'une des revendications 1 à 8, caractérisé en ce qu'il contient comme charge supplémentaire du noir de carbone, la teneur en noir de carbone étant au plus aussi haute que la teneur en acide silicique, et la teneur totale en charges étant limitée à 100 parties en masse pour 100 parties en masse d'élastomères totaux.

10. Mélange de caoutchoucs selon la revendication 9, caractérisé en ce qu'il contient 20 à 40 parties en masse de noir de carbone pour 100 parties en masse d'élastomères totaux.

11. Mélange de caoutchoucs selon l'une des revendications 1 à 10, caractérisé en ce que le copolymère a une température de transition vitreuse (Tg) de -60°C à -10°C, le polybutadiène a une température de transition vitreuse (Tg) de -107°C à -95°C et le polyisoprène a une température de transition vitreuse (Tg) de -15°C à +5°C.

12. Chape de pneumatique, caractérisée en ce qu'elle contient un mélange de caoutchoucs vulcanisable avec du soufre selon l'une des revendications 1 à 11.

13. Pneumatique, caractérisé en ce qu'il contient une chape vulcanisée avec du soufre selon la revendication 12.
